# EUROPÄISCHE PATENTSCHRIFT

(11) **EP 0 619 439 B1**
(45) Veröffentlichungstag und Bekanntmachung des Hinweises auf die Patenterteilung: **09.10.1996**
(21) Anmeldenummer: 94830134.6
(22) Anmeldetag: 23.03.1994
(51) Int. Cl.: F16D 69/04

(54) **Scheibenbremsbelag mit Sinterreibelementen**
Disc brake lining with sinter friction elements
Garniture de frein à disque avec des éléments de friction frittés

(30) Priorität: 05.04.1993 IT RM930206
(43) Veröffentlichungstag der Anmeldung: 12.10.1994
(73) Patentinhaber: FRENDO S.p.A., I-83100 Avellino (IT)
(72) Erfinder: Russo, Sergio, Frendo S.p.A., I-83100 Avellino (IT)
(74) Vertreter: Taliercio, Antonio

(56) Entgegenhaltungen:
- EP-A- 0 102 469
- EP-A- 0 106 782
- EP-A- 0 128 276
- EP-A- 0 263 752
- DE-U- 8 514 607

## Beschreibung

Die Erfindung bezieht sich auf den allgemeinen Gebiet von Scheibenbremsbelaegen fuer Schienen- und schwere Transportfahrzeuge insbesondere einen Belag, der aus einer als Metallager wirkende Traegerplatte besteht, auf der gesinterte Reibelelemente montiert sind.

Bremsbelaege der vorstehende Art sind an sich bekannt.

Die Reibelelemente koennen Zylinder oder Saeulen mit symmetrischem vieleckigem Querschnitt sein. Die Aufloesung der Reibflaeche in eine Vielzahl von Einzelementen wurde entwickelt, um eine bessere Temperaturverteilung auf der Gegenflaeche zu erreichen und so konzentrierte Temperaturhoehungen zu vermeiden, die zu einer Beschaedigung der Gegenflaeche selbst fuehren koennen. Die hohen, bei schweren Bremsbedigungen entstandenen Temperaturen auch hoeher als 600°C, fuehren jedoch zu einer Verformung der Grundplatte und damit zu einer ungleichmaessigen Belastung der einzelnen Reibelemente.

Es kommt zu oertlichen Ueberhitzungen, die einen erhoehten Abrieb sowohl an der Scheibe wie an den Reibelementen und bei schweren Bremsbedingungen die Ausbildung sogenannter Feuerbaender zur Folge haben. Um diesem Nachteil zu begegnen, wurde vorgeschlagen, die Reibelemente auf einer flexiblen Platte zu montieren, die an den Raendern mit Nieten unter Verwendung von Abstandshaltern auf die Traegerplatte befestigt war (EP-B 0 106 782). Durch die hohe Temperatur verformt sich jedoch auch diese, an den Raendern fest eingespannte Platte, so dass eine gleichmaessige Anpresskraft aller Reibelemente auf der Bremsscheibe nicht erreicht wird. Die Traegerplatte hingegen wird durch die verbesserte Belueftung vor den Temperatureinfluessen geschuetzt.

Es wurde ebenfalls vorgeschlagen, die Reibelemente gegen die Grundplatte mit vorgespannten Tellerfedern abzustuetzen und die Bewegungen der Reibelemente durch eine gelochte Platte zu steuern, die gleichfalls auf der Grundplatte mit Abstand aufgenietet war. Beim Bremsen konnten sich die Reibelemente in Richtung der Grundplatte bewegen und die Anpresskraefte waren nahezu ausgeglichen (DE-U-85 14 607.2).

Es stellte sich jedoch heraus, dass die Funktionsfaehigkeit dieser Konstruktion sehr beschraenkt war, da die Federn beim Bremsvorgang sich so stark erhitzen, dass sie sich unter dem Druck verformen und ihre Federwirkung vollstaendig einbuessen. Ausserdem, fuehren Abrieb und Rost schliesslich dazu, dass die Beweglichkeit der Reibelemente voellig verloren geht.

In der EP-B 0 263 752 wird nun vorgeschlagen, je drei Reibelemente auf einer biegesteifen Platte zu befestigen, die in ihren Schwerpunkten von einer Fuehrungsplatte gehalten werden und ueber in Dichtungstraeger frei gleitbaren Hydraulikkolben mit der Traegerplatte verbunden. Mittels der Hydraulik werden die Einzelelemente zwar gleichmaessig an die Bremsscheibe angepresst, aber die Konstruktion hat sich sehr aufwendig und technisch schwer herstellbar erwiesen.

Es bestand daher die Aufgabe, einen Scheibenbremsbelag der vorstehenden Art zu entwickeln, bei dem eine gleichmaessige Anpressung der einzelnen Reibelemente an die Bremsscheibe erreicht wird.

Die Aufgabe wird erfindungsgemaess dadurch geloest, dass die Reibelemente 1 in kleinen Gruppen auf auch bei hohen Temperaturen elastisch verformbaren Stahlplatten 2 montiert sind. Die Reibelemente 1 werden auf beweglichen Enden der Stahlplatten 2 befestigt, die ihrerseits mit einem Abstand auf der Traegerplatte 3 befestigt sind.

Die gesinterten Reibelemente koennen mit Stuetzelementen wie einer metallischen Bodenplatte und/oder einer mantelartigen Metallumhuellung versehen sein. Sinterkoerper ohne Stuetzelemente koennen auf der Stahlplatte durch Nieten, Sintern, Schweissen oder Hartloeten befestigt werden.

Die Befestigung der Platten auf der Bodenplatte ist zwischen den Reibelementen durchgefuehrt und zwar so, dass diese auf derselben sich frei bewegen koennen. Ausserdem, ist es moeglich zwischen den frei beweglichen Plattenenden und der Bodenplatte waermebestaendige Schichte aus Isoliermaterial einzufuegen, wie beispielsweise eine organisch gebundene, dreidimensionale Fasergebilde, die starke Schwingungen aufzunehmen und ggf. zu daempfen vermag. Noetigenfalls, wenn die Reibelemente mit einer Grundplatte versehen sind, dann koennen sie, ggf. nach Anordnung einer waermebestaendigen Isolierschicht, auf der Stahlplatte aufgenietet werden.

Die Befestigung der Platten auf der Traegerplatte kann durch Nieten, Praegefuegen oder Schweissen erfolgen unter Verwendung entsprechender Distanzstuecke. Bevorzugt werden jedoch loesbare Verbindungen, wie beispielweise Schraub- und Klemmverbindungen, um die Wiederverwendung der Traegerplatte zu ermoeglichen, bzw. zu erleichtern.

Die Anzahl der Reibelemente auf den einzelnen Platte ist abhaengig vom Durchmesser der Elemente und von der Forderung, dass die Elemente moeglichst gleichmaessig zur Mittelinie der Traegerplatte angeordnet sein sollen. Je groesser die Zahl der Elemente auf der Stahlplatte wird, um so groesser wird der freie Bereich in der Mitte der Stahlplatte, wodurch die nuetzliche Gesamtfaeche verkleinert wird. Daher werden selten mehr als sechs Reibelemente auf einer Stahlplatte angeordnet sein.

Bevorzugt werden Gruppen von je zwei oder drei Reibelementen mit einer Querschnittsflaeche von etwa 8 cm² auf einer Stahlplatte. Bei der Anordnung von mehr als zwei Elementen, kann die Stahlplatte mit Schlitzen oder anderen Ausnehmungen versehen sein, die vom Rand und/oder Mittelpunkt der Stahlplatte in Richtung der Befestigung verlaufen. Dadurch wird die Flexibilitaet der Stahlplatte hoeher.

Bei Reibelementen mit vieleckigem Querschnitt ist es sinnvoll, die Elemente zumindest im Einlaufbereich auf den Stahlplatten so anzuordnen, dass sie je eine senkrecht zur Drehrichtung der Scheibe verlaufende Seite, d.h. in seiner Radialrichtung, aufweisen; eine solche Anordnung ist sehr zweckmaessig zum Aufbrechen der duenen Wasserschicht, die sich bei Bremsen im feuchten Wetter bilden kann.

Die Platten bestehen vorzugsweise aus rostfreiem Stahl, der spannungsfrei bei Temperaturen oberhalb der hoechst moeglichen Betriebstemperatur geglueht wurde; dadurch werden Gluehungserscheinungen und darauf zurueckzufuehrender Elastizitaetsverlust vermieden.

Weitere Vorteile und Merkmale der vorliegenden Erfindung werden aus der folgenden Beschreibung von vorgezogenen Ausfuehrungsformen ersichtlich, die in den beiliegenden Zeichnungen nur beispielweise veranschaulicht sind.

In den Zeichnungen:
Figur 1 zeigt die Kontaktflaeche eines Bremsbelags, der durch je zwei Sinterreibelemente tragende Metalplatten gekennzeichnet ist,
Figur 2 stellt die Frontasicht zum Reibbelag nach Fig. 1 dar,
Figur 3 zeigt einen Bremsbelag, der durch je drei Sinter-Reibelemente gekennzeichnet ist,
Figur 4 stellt eine der moeglichen Klemmverbindungen zwischen Stahlplatte und Traegerplatte dar,
Figur 5 zeigt eine Stahlplatte mit sechs Reibelementen.

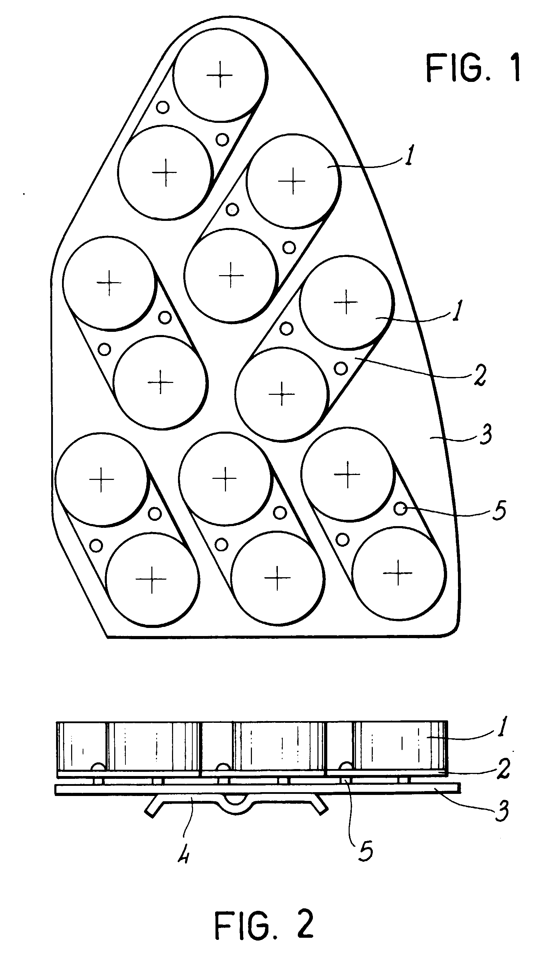

Je zwei gesinterte Reibelemente 1 mit kreisfoermigem Querschnitt sind in Fig. 1 mit ihren Boeden auf den Enden der Stahlplatte 2 aufgenietet, wobei die Aufnietung bei Anwendung eines entsprechenden, den Boden des Reibelementes 1 bildenden Metallager durchgefuehrt wird.

Die Metallplatte 2 wird auf der Traegerplatte 3 duch angebrachte Stahlniete, mit Einlage von entsprechenden Abstandhalter 5, gleichfalls aus Stahl aufgenietet, die gegebenfalls einstueckig mit den Nieten hergestellt sein koennen. Die Verbindung zwischen Stahlplatte 2 und Traegerplatte 3 liegt auf der Symmetrieachse der Stahlplatte 2 zwischen zwei Reibelementen 1, so dass die Stahlplatte 2 in zwei Zungen geteilt wird. Die anordnung der Stahlplatten 2 auf der Traegerplatte 3 wurde in dieser Weise durchgefuehrt, um so das Nassverhalten der Reibzahl optimal zu verbessern und einen moeglichst gleichmaessigen Verschleiss der Reibelmente auch bei verschiedenen Umfangsgeschwindigkeiten zu erhalten.

In der Frontansicht des Belages in Fig. 2 ist ein Schwalbenschwanz 4 dargestellt, der die Montage des Belags im Belagtraeger gestattet, wobei der Schwalbenschwanz 4 auf der Traegerplatte 3 aufgenietet oder aufgeschweisst ist.

Es hat sich erwiesen, dass dieser Belag bei Tests nach den U.I.C. Spezifikationen einen gleichmaessigen Verschleiss der Reibelemente aufweist und Feuerbaender oder "hot spots" wurden nicht beobachtet.

Die hoechsten, vermittels sechs Thermopaare auf der Scheibenflaeche ermittelte Temperaturen, haben nie 400°C, auch beim Bremsen bei einer Geschwindligkeit von 320 Km/h, ueberschritten, wobei diese Temperaturen viel niedriger als die mit den vergleichbaren, der EP-B-0 106 782 entsprechenden Belaegen ermittelten Temperaturen sind.

Der Reibungskoeffizient war wesentlich gleichmaessiger bei unterschiedelichem Anpressdruck sowohl bei hohen als auch niedrigen Geschwindigkeiten und auchduch der Verschleiss war niedriger.

Das bedeutet, dass mit dem erfindungsgemaessen Scheibenbremsbelag eine gleichmaessige Anpressung der gesinterten Reibelemente an die Bremsscheibe erreicht wird.

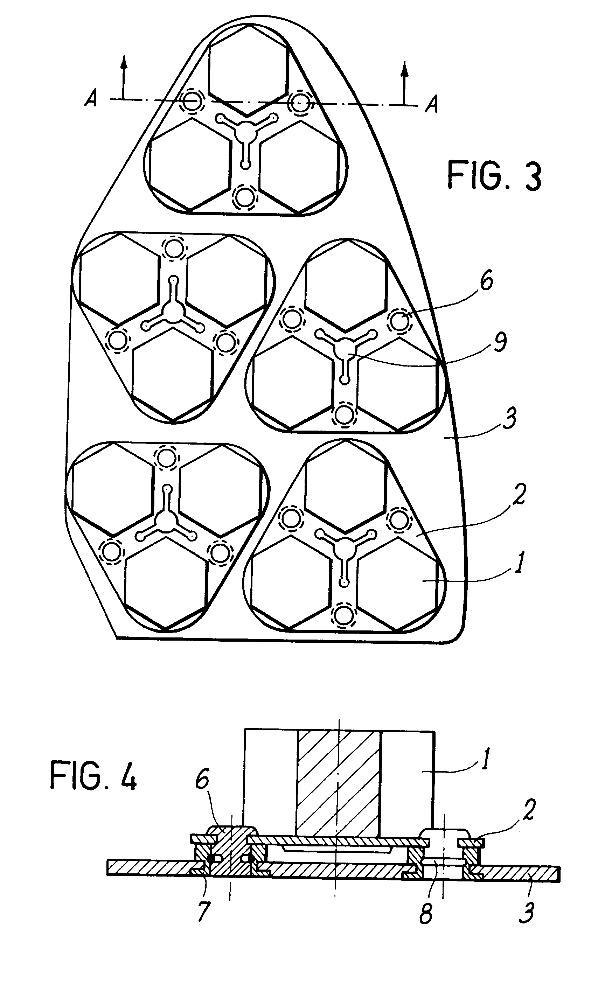

Gleich gute Eigenschaften weist der Scheibenbremsbelag nach Figur 3 auf. Hier sind je drei Reibelemente 1 mit regelmaessig sechseckigem Querschnitt auf der Stahlplatte 2 aufgenietet, deren Form einem gleichseitigen Dreieck mit abgerundeten Ecken entspricht. Die Reibelemente sind auf den Winkelhalbbierenden in den Ecken des Dreiecks und die Befestigungsbolzen 6 nahe der gegenueberliegenden Seite angeordnet. In der Mitte der Stahlplatte 2 befindet sich eine Ausnehmung 9 mit in Richtung der Befestigungsbolzen 6 verlaufenden Schlitzen. Auf diese Weise ist die Stahlplatte 2 in drei unabhaengig voneinander bewegliche Zungen unterteilt.

Die Stahlplatten 2 sind auf der Traegerplatte 3 so angeordnet, dass die Seiten der Reibelemente etwa senkrecht zur Drehrichtung der nicht dargestellten Bremsscheibe verlaeuft.

Alternativ, koennen die Stahlplatten 2 auch loesbar mit der Traegerplatte 3 verbunden sein, wie im Schnitt A-A in Fig. 4 dargestellt. In die Traegerplatte 3 ist ein gelochter Abstandhalter 7 eingenietet, der im Inneren eine umlaufende Nut aufweist. In die Stahlplatte 2 sind drei Befestigungsbolzen 6 eingenietet, die ebenfalls mit einer umlaufenden Nut versehen sind. Beim Zusammenbau, wird in die Nut des Befestigungsbolzen 6 ein teperaturbestaendiger Federring 8 eingelegt und die Bolzen 6 in den zugehoerigen Abstandhalter 7 hineingedrueckt, bis der Federring 8 in die Nut des Abstandhalters 7 einschnappt. Da die Verbindung keine Zugkraefte, sondern nur Druck- und Scherkraefte, Aufnehmen soll, ist diese leicht loesbare Klemmverbindung fuer die Fixierung der Stahlplatte 2 auf der Traegerplatte 3 geeignet und erlaubt ein leichtes Auswechsel der Reibelemente.

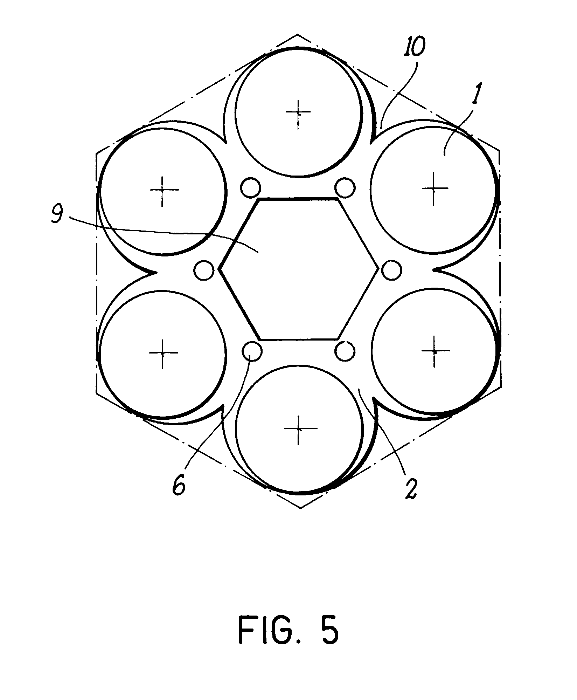

Da die Anzahl der Reibelemente nicht auf drei Elemente je Stahlplatte beschraenkt ist, ist in Figur 5 eine Ausfuehrungsform mit sechs Reibelementen 1 auf jeder Stahlplatte 2 dargestellt die dazu eine regelmaessige sechslobaere Form, hat. Die zylindrischen oder vieleckigen Reibelemente 1 sind auf den Ecken oder in den Loben der Platte 2 befestigt. Die Befestigungsbolzen 6 sind auf der Senkrechten zum Mittelpunkt je einer Seite des die Platte 2 bildendenen Sechsecks und laengs eines gegenueber den Reibelementen 1 inneren Kreises angeordnet.

Symmetrisch zwischen je zwei Loben der Metallplatte 2 sind Einkerbungen 10 vorgesehen, deren Spitzen in Richtung der Befestigungsbolzen 6 weisen. In der Mitte der Stahlplatte 2 ist eine Ausnehmung 9 vorgesehen, die ebenfalls sechseckige Form hat aber gegenueber den Loben der Platte 2 um 30° verdreht ist so dass die Spitzen in Richtung der Befestigungsbolzen 6 zeigen. Auf diese Weise wird die Stahlpatte 2 in sechs unabhaengig voneinander bewegliche Zungen unterteilt.

## Patentansprüche

1. Scheibenbremsbelag, bestehend aus einer metallischen Traegerplatte (3), auf der gesinterte Reibelemente (1) tragende Metallplatten (2) befestigt sind, dadurch gekennzeichnet, dass die Reibelemente (1) in kleinen Gruppen auf den Endteilen der auch bei hohen Temperaturen elastisch verformbaren Metallplatten (2) montiert sind und die Metallplatten (2) so mit Abstand auf der Traegerplatte (3) durch Befestigungsbolzen (5,6) befestigt sind, dass die Reibelemente (1) sich auf vorstehenden, frei beweglichen Enden der Stahlplatte (2) befinden.

2. Scheibenbremsbelag nach Anspruch 1, dadurch gekennzeichnet, dass auf den Metallplatten (2) zwei oder drei Reibelemente (1) befestigt sind.

3. Scheibenbremsbelag nach Ansprueche 1 und 2, dadurch gekennzeichnet, dass die Reibelemente (1) mit ihren eigenen Metalllager auf die Stahlplatte, (2) genietet sind.

4. Scheibenbremsbelag nach Anspruch 3, dadurch gekennzeichnet, dass sich zwischen den Stahlplatten (2) und der Traegerplatte (3) eine hochtemperaturbestaendige Isolier- oder Daempfungsschicht befindet.

5. Scheibenbremsbelag nach einem der Ansprueche 1 bis 4, dadurch gekennzeichnet, dass die Metallplatten (2) mit Ausnehmungen (9,10) versehen sind, die von der Mitte und/oder vom Rand in Richtung der Befestigungsbolzen (5,6) verlaufen und die Metallplatte (2) in miteinander verbundene, unabhaengig voneinander beweglichen Zungen unterteilen.

6. Scheibenbremsbelag nach einem der Ansprueche 1 bis 5, dadurch gekennzeichnet, dass zwischen den Reibelementen (1) und der entsprechenden Metallplatte (2) eine Isolier- und Daempfungsschicht angeordnet ist.

7. Scheibenbremsbelag nach Ansprueche 4 und 6, dadurch gekennzeichnet, dass die vorgenannte Isolier- und Daempfungsschicht aus einer dreidimensionalen, mit einem organischen Bindemittel gebundenen Faseranordnung bestehet.

8. Scheibenbremsbelag nach Ansprueche 1 bis 7, dadurch gekennzeichnet, dass die Metallplatten (2) auf der Traegerplatte ausnehmbar befestigt sind.

9. Scheibenbremsbelag nach dem Anspruch 8, dadurch gekennzeichnet, dass zur Befestigung der Platten (2) auf der Traegerplatte (3) ein eingebrachter gelochter Abstandhalter (7) aufgenietet ist, in dessen Inneren eine Umlaufsnut vorgesehen ist,- dass auf der Platte (2) Befestigungsbolzen (6) aufgenietet sind, an deren Aussenflaechen ebenfalls eine Umlaufsnut vorgesehen ist, so dass bei der Montage die vorgenannten Befestigungsbolzen (6) in die vorgenanten Abstandhalter, mit Einlage von waermebestaendigen Federringen, in den durch die vorgenannten gegenueberstehenden Nuten gebildeten Sitz eingepresst werden.

## Claims

1. Disc brake lining consisting of a metal support plate (3), at which sinter elements friction (1) bearing metal plates (2) are fastened, characterized by that the friction elements (1) are fastened in small units on the end portions of the metal plates (2), which are elastically deformable at high temperatures and the metal plates are spaced and secured to the support plate (3) by fastening bolts (5,6), so that the friction elements (1) lie at freely movable projection ends of the steel plate (2).

2. Disc brake lining according to claim 1, characterized in that two or three friction elements (1) are fastened on the metal plates (2).

3. Disc brake lining according to claims 1 and 2, characterized in that the friction elements are riveted on the steel plate (2) with their own metal supports.

4. Disc brake lining according to claim 3, characterized in that a temperature resisting isolation and damping layer is arranged between the steel plates (2) and the support plate (3).

5. Disc brake lining according to claim 3, characterized in that the metal plates (2) are provided with apertures (9,10) extending from the centre and/or edge in direction of the fastening bolts (5,6) and divide the metal plate (2) into tongues, which are connected to one another and movable independently from one another.

6. Disc brake lining according to one of the claims 1 to 5, characterized in that an isolating and damping layer an isolating and damping layer is arranged between the friction elements (1) and respective metal plates (2).

7. Disc brake lining according to claims 4 and 6, characterized in that the said isolating and damping layer consists of a tridimensional fiber unit bound by an organic binder.

8. Disc brake lining according to claims 1-7, characterized in that the metal plates (2) are removable fastened on the support plate.

9. Disc brake lining according to claim 8, characterized in that for fastening the plates (2) on the support plate (3) there is riveted a suitable perforated spacer (7) and a peripheral slot is provided therein, in that on the plate (2) there are riveted fastening bolts (6), on the surfaces of which also a periphered slot is provided, so that at the assemblage with said spacer said fastening bolts (6) are pressed, by inserting heat resisting elastic rings, into the seat formed by said opposite slots.

## Revendications

1. Garniture de frein à disque composée d'une plaque métallique de support (3), à laquelle sont fixes des plaque metalliques (3) portantes des éléments de friction frittés (1), caractérisée en ce que les élément de friction (1) sont montés en petits groupes sur les parties terminales des plaques métalliques (3), qui sont élastiquement déformables même à températures élevées et les plaques métalliques sont espacées et fixées sur la plaque de support (3) par des boulons de fixage (5, 6) de façon à ce que les élément de friction (1) se trouvent sur les bouts en saillir mobiles de la plaque d'acier (2).

2. Garniture de frein à disque selon la revendication 1, caractérisée en ce que sur les plaques métalliques sont fixés deux ou trois élément de friction (1).

3. Garniture de frein à disque selon la revendications 1 et 2, caractérisé en ce que les éléments de friction (1) sont rivés avec leur propres support métallique sur la plaque d'acier (2).

4. Garniture de frein selon les revendication 3, caracterisée en ce que entre les plaques d'acier (2) et la plaque de support (3) se trouve une couche d'isolation et d'amortissement résistant à la température.

5. Garniture de frein selon les revendications 1 à 4, caracterisée en ce que les plaques métalliques sont munies des évidages (9, 10), qui s'étandent du centre et/ou du bord en direction des boulons de fixage (5, 6) et subdivisent la plaque métallique (2) en languettes reliées l'une à l'autre et déplaceables indépendentement l'une de l'autre.

6. Garniture de frein à disque selon une des revendications 1 à 5, caractérisée en ce que entre les éléments des friction et la correspondante plaque métallique (2) est placée une couche d'isolation et d'amortissement.

7. Garniture de frein à disque selon les revendications 4 et 6, caracterisée en ce que la dite couche d'isolation et d'amortissement est formée d'un ensemble tridimensionnel des fibres liées par un liant organique.

8. Garniture de frein à disque selon les revendications 1 à 7, caractérisée en ce que les plaques métallique sont fixées de façon amovible sur la plaque de support.

9. Garniture de frein à disque selon la revendication 8, caracterisée en ce que pour fixer les plaques (2), sur la plaque de support est rivé une entretoise perforée appropriée (7), dans lintérieur de laquelle est prevue une rainure circonférenciele; en ce que sur la plaque (2) sont rivé lesdits boulons de fixage (6), sur les surfaces extérieures desquels est prevue également une rainure circonférenciele, de façon à ce que pendant l'assemblage avec ladite entretoise, lesdits boulons de fixage (5) sont pressés, avec l'insertion des bagues élastiques résistants à la chaleur, dans le siège formée par lesdites rainures opposées.
